# EUROPÄISCHE PATENTSCHRIFT

(11) **EP 1 276 294 B1**
(45) Veröffentlichungstag und Bekanntmachung des Hinweises auf die Patenterteilung: **20.09.2006**
(21) Anmeldenummer: 02100716.6
(22) Anmeldetag: 17.06.2002
(51) Int. Cl.: H04L 29/06

(54) **Verfahren zur Unterstützung von Dienstgütemerkmalen in heterogenen Kommunikationsnetzen**
Method for supporting Quality Of Service parameters in heterogeneous communication networks
Méthode pour supporter des paramètres de qualité de service dans les réseaux de communication hétérogènes

(30) Priorität: 11.07.2001 DE 10133648
(43) Veröffentlichungstag der Anmeldung: 15.01.2003
(73) Patentinhaber: SIEMENS AKTIENGESELLSCHAFT, 80333 München (DE)
(72) Erfinder: Klaghofer, Karl, 81373, München (DE); Müller, Harald, 82205, Gilching (DE); Müller, Heribert, 3730, Eggenburg (AT); Totzke, Jürgen, 85586, Poing (DE)
(74) Vertreter: Wiedemann, Albert

(56) Entgegenhaltungen:
- EP-A- 1 100 280
- EP-A- 1 111 892
- WO-A-00/77988
- WO-A-01/35579

## Beschreibung

Zeitgemäße Kommunikationssysteme, z. B. zur Sprach-, Video-, Multimedia- und/oder Datenkommunikation, erstrecken sich häufig über mehrere Netzwerke, die auf unterschiedlichen Netzwerktechnologien, z.B. unterschiedlichen paket- oder leitungsvermittelten Technologien, basieren können. Dabei ist es nicht ungewöhnlich, dass einzelne Netzwerke eines größeren Kommunikationssystems von voneinander unabhängigen Netzbetreibern nach unterschiedlichen, individuellen Netzbetriebsstrategien betrieben werden.

Verschiedene Netzwerke werden häufig mit Hilfe von Netzübergangseinrichtungen, sogenannte Gateways, miteinander gekoppelt, um Daten netzwerkübergreifend zu übertragen. Ein derartiger Gateway hat insbesondere die Funktion, unterschiedliche Datenübertragungsverfahren von unterschiedlichen angeschlossenen Netzwerken aneinander anzupassen.

Eine wichtige Eigenschaft einer Datenübertragung, insbesondere im Rahmen einer Kommunikationsverbindung, ist die sogenannte Dienstgüte. Die Dienstgüte einer Datenübertragung wird häufig auch als Quality-of-Service (QoS) bezeichnet, und kann unterschiedliche Übertragungs- und Verbindungseigenschaften, wie z.B. die Übertragungsbandbreite, die Übertragungsgeschwindigkeit und/oder die maximale oder mittlere Fehlerrate oder Übertragungsverzögerung umfassen.

Zur Sicherung der Dienstgüte einer Kommunikationsverbindung sind unterschiedliche Verfahren, z.B. aus der ITU-T-Empfehlung H.323 bekannt. Diese Verfahren sowie die dabei jeweils vorgebbaren Dienstgüteeinstellungen sind in der Regel abhängig von der Netzwerktechnologie und den verfügbaren Übertragungsverfahren eines jeweiligen Transportnetzwerks. In einem sich über mehrere unterschiedliche Netzwerke erstreckenden, heterogenen Kommunikationsnetz lassen sich netzwerkspezifische Verfahren zur Sicherung der Dienstgüte gemäß dem bisher bekannten Stand der Technik nicht ohne weiteres netzwerkübergreifend aneinander anpassen. In der Regel können bekannte Verfahren zur Sicherung der Dienstgüte in derartigen heterogenen Kommunikationsnetzen nicht netzwerkübergreifend angewandt werden, oder nur dann angewandt werden, wenn diese Verfahren und die zugehörigen Dienstgüteeinstellungen über das ganze Kommunikationsnetz hinweg einheitlich sind.

Aus der Druckschrift WO 00/77988 A1 ist ein Verfahren zur Sicherung der Dienstgüte in einem heterogenen Netzwerk bekannt. Die Anwendung dieses Verfahren ist jedoch auf Verbindungen von einem Mobilnetz in ein paketorientiertes Netzwerk beschränkt.

Es ist Aufgabe der vorliegenden Erfindung ein Verfahren zur netzwerkübergreifenden Unterstützung von Dienstgütemerkmalen in heterogenen Kommunikationsnetzen anzugeben.

Gelöst wird diese Aufgabe durch ein Verfahren mit den Merkmalen des Patentanspruchs 1.

Das erfindungsgemäße Verfahren wird im wesentlichen von einer Gatewayeinrichtung, d.h. einer Netzübergangseinrichtung, ausgeführt, die logisch in eine Gatewaysteuerung und einen oder bedarfsweise mehrere Nutzdatengateways getrennt ist. Die Verwendung einer derartigen, logisch aufgeteilten Gatewayeinrichtung, z.B. gemäß der ITU-T-Empfehlung H.248, hat den Vorteil, dass das erfindungsgemäße Verfahren sehr gut auf Kommunikationsnetze unterschiedlicher Größenordnung skaliert werden kann und besonders für heterogene, verteilte Netzwerkarchitekturen geeignet ist. Während die Gatewaysteuerung insbesondere zur Signalisierungserfassung, Signalisierungsverarbeitung und/oder Signalisierungsumsetzung dient, werden vom Nutzdatengateway insbesondere Nutzdaten, wie z. B. Sprachdaten, Videodaten, Multimediadaten und/oder Dateidaten, übertragen und gegebenenfalls umgesetzt.

Von der Gatewaysteuerung wird erfindungsgemäß eine Dienstgüteinformation, z.B. in Form einer Dienstgütemeldung oder eines Dienstgütesignals, abhängig von einer erfassten Dienstgütesignalisierung zum Nutzdatengateway übermittelt. Durch den Nutzdatengateway werden spezifische Dienstgüteeigenschaften von Verbindungsabschnitten, die am Nutzdatengateway ankommen und/oder abgehen erfasst und abhängig davon eine Dienstgüteeinstellung gemäß der übermittelten Dienstgüteinformation vorgenommen. Als Dienstgüteeigenschaften können beispielsweise netzwerkspezifische, schnittstellenspezifische, verbindungsspezifische und/oder dienstgütetypspezifische Dienstgüteeigenschaften der Verbindungsabschnitte erfasst werden.

Vorteilhafte Ausführungsformen und Weiterbildungen der Erfindung sind in den abhängigen Ansprüchen angegeben.

Die Dienstgüteinformation kann vorzugsweise mittels eines Protokolls gemäß ITU-T-Empfehlung H.248 übermittelt werden, das um ein Dienstgüteinformation-Signalisierungselement erweitert ist. Durch die Erweiterung kann dieses zur Kommunikation von Gatewaykomponenten besonders geeignete Signalisierungsprotokoll auch zur Übermittlung von Dienstgüteinformationen verwendet werden.

Alternativ dazu kann die Dienstgüteinformation mittels eines um ein Dienstgüteinformation-Signalisierungselement erweiterten sogenannten "Media Gateway Control Protocol" (MGCP) gemäß IETF-Standart übermittelt werden.

Nach einer vorteilhaften Weiterbildung der Erfindung kann der Nutzdatengateway die Dienstgüteeigenschaften von abgehenden und ankommenden Verbindungsabschnitten vergleichen und abhängig vom Vergleichsergebnis diesen Verbindungsabschnitten zugeordnete Dienstgüteparameter umsetzen. Auf diese Weise können beispielsweise, falls sich die Dienstgüteeigenschaften eines ankommenden Verbindungsabschnittes einer Verbindung von den Dienstgüteeigenschaften eines abgehenden Verbindungsabschnittes dieser Verbindung unterscheiden, die dem ankommenden Verbindungsabschnitt zugeordneten Dienstgüteparameter in äquivalente Dienstgüteparameter für den abgehenden Verbindungsabschnitt umgesetzt werden. Die Umsetzung erfolgt vorzugsweise so, dass für beide Verbindungsabschnitte in ihrer Wirkung möglichst ähnliche Dienstgüteeinstellungen vorgenommen werden. Die vom Vergleich der Dienstgüteeigenschaften abhängige Umsetzung der Dienstgüteparameter kann durch den Nutzdatengateway weitgehend selbständig d.h. ohne Rückfrage bei der Gatewaysteuerung durchgeführt werden. Damit ist keine zusätzliche spezifische Signalisierung erforderlich.

Nach einer vorteilhaften Ausführungsform der Erfindung kann durch die Gatewaysteuerung eine generische Dienstgüteinformation zum Nutzdatengateway übermittelt werden. Als generisch kann in diesem Zusammenhang eine Dienstgüteinformation bezeichnet werden, die von den Nutzdaten transportierenden Netzwerken unabhängig ist oder zumindest nicht transportnetzspezifisch ist. Die übermittelte generische Dienstgüteinformation wird durch den Nutzdatengateway abhängig von den verbindungsabschnittspezifischen Dienstgüteeigenschaften in verbindungsabschnittspezifische Dienstgüteeinstellungen umgesetzt.

Die Gatewaysteuerung kann anstelle einer generischen Dienstgüteinformation auch eine spezifische Dienstgüteinformation, die z.B. netzwerkspezifisch, schnittstellenspezifisch und/oder dienstgütetypspezifisch sein kann, zum Nutzdatengateway übermitteln. Die von den Dienstgüteeigenschaften der Verbindungsabschnitte abhängige Umsetzung der Dienstgüteinformation kann in diesem Fall entfallen oder durch eine Prüfung, ob die spezifische Dienstgüteinformation mit den Dienstgüteeigenschaften vereinbar ist, ersetzt werden.

Nach einer weiteren vorteilhaften Ausführungsform können die vom Nutzdatengateway abgehenden Verbindungsabschnitte jeweils durch ein spezifisches, Dienstgüteparameter aufweisendes Datenobjekt im Sinne eines objektorientierten Programmierkonzepts, gesteuert werden.

Nach einer weiteren vorteilhaften Weiterbildung der Erfindung kann die Gatewaysteuerung verbindungsabschnittspezifische Dienstgüteeigenschaften vom Nutzdatengateway abfragen und die Dienstgüteinformation dann abhängig von den abgefragten Dienstgüteeigenschaften übermitteln. Vorzugsweise kann die Abfrage der Dienstgüteeigenschaften vor Aufbau einer Verbindung erfolgen, um die Dienstgüte für die Verbindung abhängig von verfügbaren Dienstgüteressourcen vorab auszuhandeln. Ein derartiges Vorabaushandeln der Dienstgüte wird häufig auch als Look-Ahead-Verfahren bezeichnet.

Gemäß einer weiteren vorteilhaften Weiterbildung der Erfindung kann abhängig von einer Dienstgütevorgabe eine weitere Dienstgüteinformation von der Gatewaysteuerung zu einem oder mehreren Verbindungsendpunkten, z.B. einem Endgerät zur Sprach-, Video- und/oder Multimediakommunikation oder zu einem multimediafähigen Personalcomputer, übermittelt werden. Die Dienstgütevorgabe kann hierbei z.B. per Systemadministration oder durch die erfasste Dienstgütesignalisierung vorgegeben sein. Durch die Übermittlung der weiteren Dienstgüteinformation zu einem Verbindungsendpunkt können Dienstgüteeinstellungen des Verbindungsendpunktes bezüglich des Nutzdatengateways eingestellt werden.

Ein Ausführungsbeispiel der Erfindung wird nachfolgend anhand der Zeichnung näher erläutert.

Dabei zeigen jeweils in schematischer Darstellung:
Fig 1 ein Kommunikationssystem mit zwei über eine logisch getrennte Gatewayeinrichtung gekoppelten Kommunikationsnetzen,
Fig 2 einen Nutzdatengateway als Teil der Gatewayeinrichtung und
Fig 3 ein Ablaufdiagramm zur Veranschaulichung des Signalisierungsablaufs beim Aufbau einer netzübergreifenden Verbindung mit vorgegebener Dienstgüte.

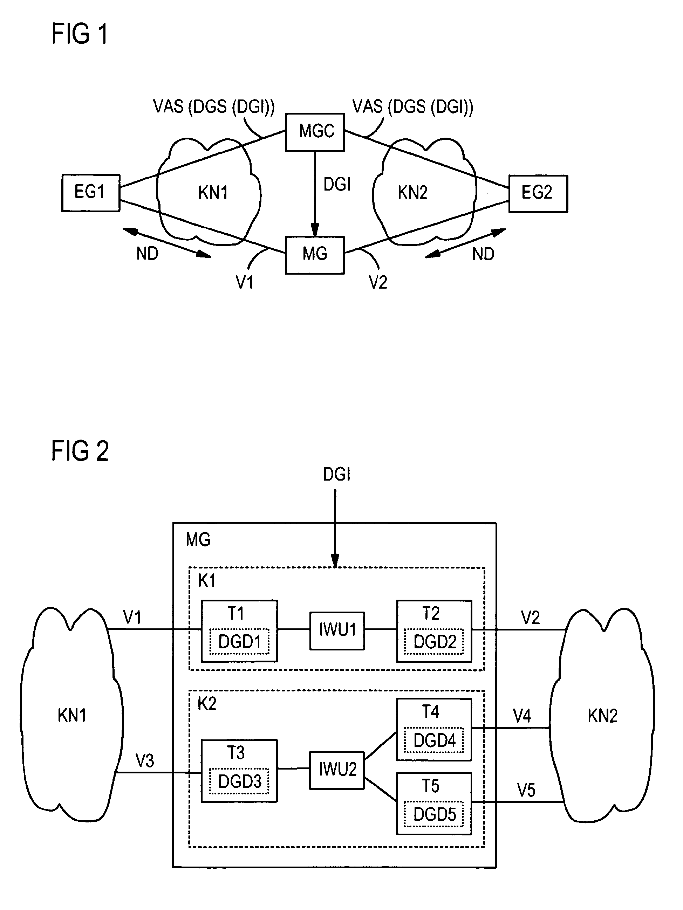

In **Fig 1** ist ein Kommunikationssystem schematisch dargestellt, bei dem unterschiedliche Kommunikationsnetze KN1 und KN2 über eine Gatewayeinrichtung gekoppelt sind, die logisch in eine Gatewaysteuerung MGC und einen Nutzdatengateway MG getrennt ist. Das Kommunikationsnetz KN1 kann hierbei z.B. ein internetprotokollbasiertes Netzwerk, wie beispielsweise ein lokales Netz zur datenpaketbasisierten Sprach-, Video-. Multimedia- und/oder Datenkommunikation sein. Ein solches paketorientiertes Kommunikationsnetz zur Sprach-, Video- und/oder Multimediakommunikation wird häufig auch als VoP-Netzwerk (VoP: Voice/Video over Packet) oder VoIP-Netzwerk (VoIP: Voice/Video over Internetprotocol) bezeichnet. Für das vorliegende Ausführungsbeispiel sei angenommen, dass das Kommunikationsnetz KN2 sich vom Kommunikationsnetz KN1 insbesondere hinsichtlich der verfügbaren Dienstgütemerkmale oder Dienstgütemechanismen unterscheidet.

Die Gatewaysteuerung MGC und der Nutzdatengateway MG können vorzugsweise gemäß der ITU-T-Empfehlung H.248 ausgestaltet sein. Eine derartige Gatewaysteuerung wird häufig auch als "Media Gateway Controller (MGC)" und ein derartiger Nutzdatengateway als "Media Gateway (MG)" bezeichnet. Die Gatewaysteuerung MGC kann außerdem mit einem sog. "Signalling Gateway (SG)" gemäß H.248 kombiniert sein.

Die Gatewaysteuerung MGC dient im Wesentlichen zum Umsetzen einer Rufsignalisierung zwischen den Kommunikationsnetzen KN1 und KN2. Dagegen dient der Nutzdatengateway MG im Wesentlichen zum Umsetzen von Nutzdaten zwischen den Kommunikationsnetzen KN1 und KN2. Damit ist die Umsetzung der Signalisierung von der Umsetzung der Nutzdaten logisch separiert, was insbesondere bei heterogenen, verteilten Netzwerkarchitekturen sehr vorteilhaft ist. Insbesondere können die Signalisierung und die Nutzdaten über unterschiedliche Leitwege geführt werden.

Weiterhin ist an das Kommunikationsnetz KN1 ein Endgerät EG1 und an das Kommunikationsnetz KN2 ein Endgerät EG2 angekoppelt. Die Endgeräte EG1 und EG2 können beispielsweise als Endgeräte zur Sprach-, Video-, Multimedia- und/oder Datenkommunikation oder als Multimedia-Personalcomputer ausgestaltet sein. Vorzugsweise bilden das Endgerät EG1 einen Verbindungsendpunkt und das Kommunikationsnetz KN1 ein VoIP-Netzwerk gemäß der ITU-T-Empfehlung H.323.

Im vorliegenden Ausführungsbeispiel wird vom Endgerät EG1 über das Kommunikationsnetz KN1, die logisch getrennte Gatewayeinrichtung und das Kommunikationsnetz KN2 eine Verbindung mit vorzugebender Dienstgüte zum Endgerät EG2 aufgebaut. Im Rahmen dieses Verbindungsaufbaus wird zwischen dem Endgerät EG1 und der Gatewaysteuerung MGC über das Kommunikationsnetz KN1 sowie zwischen der Gatewaysteuerung MGC und dem Endgerät EG2 über das Kommunikationsnetz KN2 eine Verbindungsaufbausignalisierung VAS durchgeführt. Die Verbindungsaufbausignalisierung VAS umfasst eine Dienstgütesignalisierung DGS, in deren Rahmen eine Dienstgüteinformation DGI zur Gatewaysteuerung MGC und von dieser zum Endgerät EG2 übertragen wird. Die Verbindungsaufbausignalisierung VAS kann beispielsweise gemäß der ITU-T-Empfehlung H.323 in Verbindung mit H.225 erfolgen. Alternativ dazu kann zur Signalisierung das sog. SIP-Protokoll (Session Initiation Protocol) gemäß IETF (Internet Engineering Task Force) verwendet werden.

Im Rahmen des Verbindungsaufbaus wird eine Nutzdatenverbindung zwischen den Endgeräten EG1 und EG2 aufgebaut, die einen vom Endgerät EG1 über das Kommunikationsnetz KN1 zum Nutzdatengateway MG führenden Verbindungsabschnitt V1 und einen vom Nutzdatengateway MG über das Kommunikationsnetz KN2 zum Endgerät EG2 führenden Verbindungsabschnitt V2 aufweist. Im Rahmen der Verbindung werden Nutzdaten ND über den Nutzdatengateway MG zwischen den Endgeräten EG1 und EG2 ausgetauscht. Die Nutzdaten ND können dabei je nach Verbindungstyp oder Endgerätetyp z.B. Sprach-, Video-, Multimedia- und/oder Dateidaten umfassen.

Die in der Verbindungsaufbausignalisierung VAS enthaltene verbindungsspezifische Dienstgütesignalisierung DGS wird durch die Gatewaysteuerung MGC erkannt und - falls erforderlich - beim Übergang zwischen den Kommunikationsnetzen KN1 und KN2 umgesetzt. Weiterhin wird durch die Gatewaysteuerung MGC die im Rahmen der Dienstgütesignalisierung DGS übermittelte Dienstgüteinformation DGI erfasst. Für das vorliegende Ausführungsbeispiel sei angenommen das die Dienstgüteinformation DGI eine generische Dienstgüteanforderung ist, die insbesondere unabhängig von den Verbindungsabschnitten V1 und V2, den zugrundeliegenden Datentransportprotokollen sowie dem Typ oder einer Technologie der an der Verbindung beteiligten Transportnetze, hier KN1 und KN2, ist. Durch die Dienstgüteinformation DGI werden eine oder mehrere generische Dienstgüteklassen für die aufzubauende Verbindung identifiziert. Beispielsweise kann auf diese Weise eine zu garantierende Datenübertragungsrate durch die Dienstgüteinformation DGI vorgegeben werden. Eine solche Datenübertragungsrate kann beispielsweise in RAS- und Setup-Verbindungsaufbaumeldungen gemäß der ITU-T-Empfehlung H.225 im Parameter "BandwidthDetails" angegeben werden.

Abhängig von der erfassten Dienstgüteinformation DGI sind der generischen Dienstgüteanforderung entsprechende Dienstgüteeinstellungen im Nutzdatengateway MG in konsistenter, verbindungsabschnittspezifischer Weise vorzunehmen. Durch die Aufteilung der generischen und spezifischen Dienstgüteverwaltung auf die Gatewaysteuerung MGC und den Nutzdatengateway MG wird die logische und die physikalische Dienstgüteverwaltung entkoppelt. Dies ist insbesondere bei heterogenen und verteilten Netzwerkarchitekturen sehr vorteilhaft.

Zum Einstellen der spezifischen Dienstgütemerkmale wird die generische Dienstgüteinformation DGI erfindungsgemäß von der Gatewaysteuerung MGC zum Nutzdatengateway MG übermittelt. Die Dienstgüteinformation DGI wird vorzugsweise mittels eines um ein Dienstgüteinformation-Signalisierungselement erweiterten H.248-Protokolls zum Nutzdatengateway MG übertragen. Die Erweiterung des H.248-Protokolls kann mittels eines Dienstgütemoduls oder "QoS-Package" (QoS: Quality of Service) erfolgen, das sog. Properties für Dienstgütekommandos ("Commands") sowie für einen Dienstgütedeskriptor ("QoS-Descriptor") aufweist.

Alternativ dazu kann die Dienstgüteinformation DGI auch mittels anderer zur Datenübertragung zwischen einer Gatewaysteuerung und einem Nutzdatengateway geeigneter Protokolle, wie z.B. dem sog. "Media Gateway Control Protocol (MGCP)" gemäß IETF-Standard erfolgen, die entsprechend um ein Dienstgüteinformations-Signalisierungselement zu erweitern sind.

Alternativ zur Übermittlung einer generischen Dienstgüteinformation kann auch eine spezifische, z.B. transportnetzspezifische und/oder verbindungsabschnittspezifische Dienstgüteinformation von der Gatewaysteuerung MGC zum Nutzdatengateway MG übertragen werden. In diesem Fall ist das zwischen Gatewaysteuerung MGC und Nutzdatengateway MG verwendete Übertragungsprotokoll um entsprechend spezifisch ausgestaltete Dienstgütemodule mit entsprechenden "Properties" zu erweitern.

Zur Anpassung von Dienstgüteeinstellungen der Verbindungsendpunkte, hier EG1 und EG2, an Dienstgüteeinstellungen des Nutzdatengateways MG kann die Gatewaysteuerung MGC eine oder mehrere weitere generische oder spezifische Dienstgüteinformationen (nicht dargestellt) zu den Verbindungsendpunkten, hier EG1 und EG2, oder zumindest an einen dieser Verbindungsendpunkte übertragen.

**Fig 2** zeigt ein Blockschaltbild des an die Kommunikationsnetze KN1 und KN2 angekoppelten Nutzdatengateways MG in detaillierterer Darstellung. Neben den über das Kommunikationsnetz KN1 bzw. KN2 verlaufenden Verbindungsabschnitten V1 und V2 zeigt Fig 2 noch weitere, in Fig 1 nicht dargestellte Verbindungsabschnitte V3, V4 und V5. Während der Verbindungsabschnitt V3 in das Kommunikationsnetz KN1 führt, führen die Verbindungsabschnitte V4 und V5 in das Kommunikastionsnetz KN2. Durch die Verbindungsabschnitte V3, V4 und V5 wird eine Dreierkonferenzschaltung realisiert.

Der Nutzdatengateway MG weist als Funktionskomponenten verschiedene Datenobjekte im Sinne eines objektorientierten Programmierkonzepts auf. Die einzelnen Datenobjekte werden durch die Gatewaysteuerung MGC durch Übermitteln von Kommandoinformationen, z.B. gemäß H.248, gesteuert. Erfindungsgemäß werden insbesondere Dienstgüteeinstellungen der Datenobjekte durch von der Gatewaysteuerung MGC übermittelte Dienstgüteinformationen gesteuert.

Im vorliegenden Ausführungsbeispiel weist der Nutzdatengateway MG sog. Terminationen T1, T2, T3, T4 und T5 sowie sog. Kontexte K1 und K2 als Datenobjekte auf. Terminationen und Kontexte können jeweils durch von der Gatewaysteuerung MGC übermittelte Kommandoinformationen erzeugt, gesteuert und gelöscht werden.

Die Terminationen bilden Quellen und Senken von Datenströmen, wobei Übertragungsparameter eines jeweiligen Datenstroms innerhalb einer jeweiligen Termination gekapselt sind. Insbesondere werden durch die Terminationen ankommende und/oder abgehende Verbindungsabschnitte terminiert. Im vorliegenden Ausführungsbeispiel terminiert die Termination T1 den Verbindungsabschnitt V1, die Termination T2 den Verbindungsabschnitt V2, die Termination T3 den Verbindungsabschnitt V3, die Termination T4 den Verbindungsabschnitt V4 und die Termination T5 den Verbindungsabschnitt V5.

Eine Termination weist sog. Deskriptoren auf, die jeweils spezifische Eigenschaften der Termination festlegen. Ein Deskriptor kann z.B. als Datenstruktur oder Datenobjekt realisiert sein. Erfindungsgemäß weisen die Terminationen T1,..,T5 insbesondere jeweils einen Dienstgütedeskriptor ("QoS-Descriptor") DGD1, DGD2, DGD3, DGD4 bzw. DGD5 auf. Jeder Dienstgütedeskriptor DGD1,...,DGD5 gibt spezifisch verfügbare Dienstgütemerkmale, spezifische Dienstgüteeigenschaften, spezifische Dienstgütetypen, spezifische Dienstgüteeinstellungen, spezifische Dienstgütemöglichkeiten und/oder spezifische Dienstgüteparameterwerte der betreffenden Termination und damit des jeweils terminierten Verbindungsabschnitts V1,...,V5 bzw. des betreffenden Kommunikationsnetzes KN1 bzw. KN2 an. Die spezifischen Dienstgüteeigenschaften einer Termination können administrativ oder durch ein Einstellungsprotokoll festgelegt und schnittstellenspezifisch verwaltet werden. So können beispielsweise durch den Dienstgütedeskriptor einer Termination eine im angekoppelten Transportnetz verfügbare Dienstgüteunterstützung und ggf. deren Parameter festgelegt werden; wie z.B. IEEE802.1D/Q auf Schicht 2 und DiffServ auf Schicht 3 des OSI-Referenzmodells mit entsprechenden Kodierungen für Sprach-, Video-, Multimedia- und/oder Datenverbindungen. Sowohl der Dienstgütetyp als auch die zugehörigen Parameterwerte können für an verschiedene Kommunikationsnetze angekoppelte Terminationen unterschiedlich sein.

Ein Kontext, hier K1 oder K2, ist im vorliegenden Objektmodell eine Assoziation einer oder mehrerer Terminationen. Eine solche Assoziation von Terminationen entspricht dabei einer Verbindung. Anders ausgedrückt bedeutet dies, dass Verbindungen im vorliegenden Objektmodell als Kontext mit einer oder mehreren Terminationen abgebildet werden. Im vorliegenden Ausführungsbeispiel wird die Verbindung zwischen den Endgeräten EG1 und EG2 als Zweipunktverbindung auf den Kontext K1 mit den den beiden Verbindungsabschnitten V1 und V2 zugeordneten Terminationen T1 und T2 abgebildet. Der in Fig 2 zusätzlich dargestellte Kontext K2 umfasst die Terminationen T3, T4 und T5 und entspricht somit einer 3er-Konferenzschaltung mit den Verbindungsabschnitten V3, V4 und V5. Eine Termination wird jeweils bei einem Verbindungsaufbau in einen der aufzubauenden Verbindungsstruktur entsprechenden Kontext gesetzt. Die Zuordnung von Terminationen zu Kontexten wird dabei durch von der Gatewaysteuerung MGC übermittelte Kommandoinformationen, z.B. in Form von Kommandomeldungen gemäß H.248 veranlasst.

Die Dienstgüteeinstellungen in den Dienstgüte-Deskriptoren DGD1,...,DGD5 der Terminationen T1,...,T5 werden durch die Übermittlung einer jeweils verbindungsspezifischen Dienstgüteinformation veranlasst. Im vorliegenden Ausführungsbeispiel bezieht sich die übermittelte Dienstgüteinformation DGI auf die Verbindung zwischen den Endgeräten EG1 und EG2 mit den Verbindungsabschnitten V1 und V2. Die Dienstgüteinformation DGI betrifft somit nur den Kontext K1 und veranlasst entsprechend eine jeweilige Dienstgüteeinstellung in den Dienstgüte-Deskriptoren DGD1 und DGD2 der Terminationen T1 und T2.

Eine jeweilige Dienstgüteinstellung wird dergestalt durchgeführt, dass zunächst die Dienstgüteeigenschaften bzw. Dienstsgütemerkmale des betreffenden Verbindungsabschnittes V1 bzw. V2 anhand des betreffenden Dienstgüte-Deskriptors DGD1 bzw. DGD2 erfasst werden. Nach der Erfassung der verbindungsabschnittspezifischen Dienstgüteeigenschaften werden abhängig davon die Dienstgüteeinstellungen gemäß der übermittelten Dienstgüteinformation DGI vorgenommen. Hierbei wird die durch die Dienstgüteinformation DGI identifizierte Dienstgüteanforderung auf solche verbindungsabschnittspezifische Dienstgütemerkmale und Dienstgüteparameter abgebildet oder umgesetzt, durch die die Dienstgüteanforderung möglichst genau erfüllt wird. Eine hierfür geeignete Abbildungsvorschrift zur Abbildung von generischen Dienstgüteklassen auf spezifische Dienstgütemerkmale und -parameter kann z.B. der ITU-T-Empfehlung H.323 Annex N entnommen werden. Die Abbildung bzw. Umsetzung der Dienstgüteinformation DGI auf verbindungsabschnittspezifische Dienstgüteeinstellungen wird vom Nutzdatengateway MG selbständig vorgenommen, so dass keine weitere spezifische Dienstgütesignalisierung erforderlich ist.

Die einzelnen Terminationen T1 und T2 bzw. T3, T4 und T5 eines jeweiligen Kontextes K1 bzw. K2 sind durch eine Umsetzeinrichtung IWU1 bzw. IWU2 miteinander gekoppelt. Die Umsetzeinrichtungen IWU1, IWU2 können beispielsweise als Programmmodule und/oder mittels eines Signalprozessors realisiert sein.

Durch die Umsetzeinrichtungen IWU1, IWU2 werden im Rahmen von Verbindungen zu übertragende Nutzdaten, Nutzdatenformate und/oder Nutdatenkodierungen bedarfsweise beim Übergang zwischen den Kommunikationsnetzen KN1 und KN2 umgesetzt oder angepasst. Insbesondere werden dabei diejenigen Umsetzungen und Anpassungen durchgeführt, die durch unterschiedliche Dienstgüteeigenschaften oder Dienstgüteeinstellungen der verschiedenen Verbindungsabschnitte V1 und V2 bzw. V3, V4 und V5 einer Verbindung bedingt sind.

Eine solche Umsetzung oder Anpassung wird z.B. im Kontext K1 dergestalt durchgeführt, dass zunächst im Rahmen des Verbindungsaufbaus die Dienstgüteeigenschaften und Dienstgüteeinstellungen der Terminationen T1 und T2 bzw. Verbindungsabschnitte V1 und V2 durch den Nutzdatengateway MG miteinander verglichen werden. Falls hierbei Unterschiede festgestellt werden, ist in der Regel eine Umsetzung oder Anpassung von Dienstgüteparametern der Dienstgütedeskriptoren DGD1 und DGD2 und/oder eine Umsetzung der Nutzdaten ND erforderlich. Die erforderliche Umsetzung oder Anpassung wird abhängig vom Vergleichsergebnis von der Umsetzeinrichtung IWU1 selbständig durchgeführt. Eine Umsetzung der Nutzdaten ND kann eine Anpassung von spezifischen Nutzdatenkodierungen oder spezifischen Dienstgütemechanismen beim Übergang zwischen den Kommunikationsnetzen KN1 und KN2 umfassen. Falls dagegen beim Vergleich keine wesentlichen Unterschiede festgestellt werden, können die Nutzdaten ND auch transparent weitergeleitet werden.

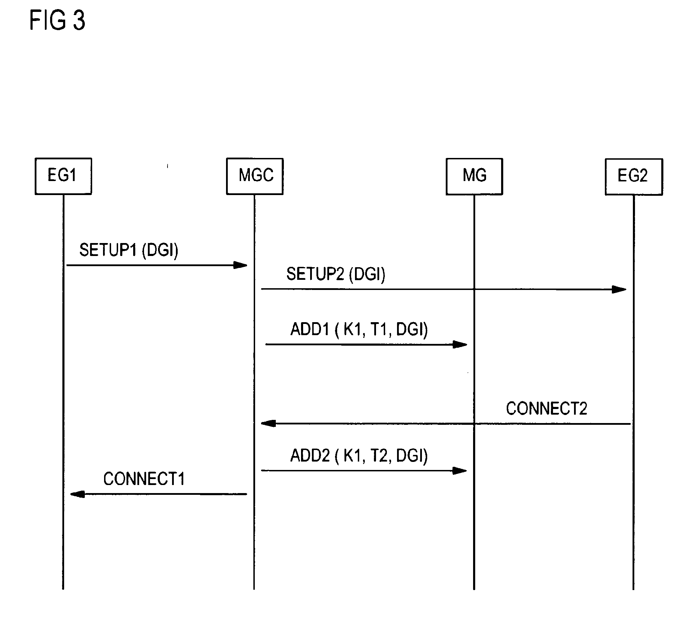

**Fig 3** zeigt ein Ablaufdiagramm zur Veranschaulichung des Signalisierungsablaufs beim Aufbau der Verbindung zwischen den Endgeräten EG1 und EG2. Die Zeitachse verläuft dabei von oben nach unten.

Zur Initialisierung des Verbindungsaufbaus wird im Rahmen der Verbindungsaufbausignalisierung VAS und der Dienstgütesignalisierung DGS eine Setup-Meldung SETUP1, z.B. gemäß H.225, mit der Dienstgüteinformation DGI vom Endgerät EG1 zur Gatewaysteuerung MGC übermittelt. Die Dienstgüteinformation DGI wird dabei von der Gatewaysteuerung MGC erkannt und erfasst. Daraufhin übermittelt die Gatewaysteuerung MGC eine zur Einleitung des Verbindungsaufbaus im Kommunikationsnetz KN2 geeignete Setup-Meldung SETUP2 mit der Dienstgüteinformation DGI zum Endgerät EG2. Außerdem überträgt die Gatewaysteuerung MGC eine Kommandomeldung ADD1, in der der Kontext K1 sowie die Termination T1 angegeben ist, zum Nutzdatengateway MG. Die Kommandomeldung ADD1 enthält dabei zusätzlich die Dienstgüteinformation DGI. Die Kommandomeldung ADD1 wird vorzugsweise mittels eines um ein Dienstgütemodul erweiterten H.248-Protokolls übermittelt.

Durch die Angabe des Kontextes K1 zusammen mit der Termination T1 wird die Termination T1 in den Kontext K1 gesetzt. Anschließend werden im Dienstgüte-Deskriptor DGC1 - wie oben bereits ausgeführt - abhängig von der übermittelten Dienstgüteinformation DGI Dienstgüteeinstellungen vorgenommen. Beispielsweise kann hierbei ein Dienstgütetyp auf DiffServ gesetzt und eine durch die Dienstgüteinformation DGI identifizierte generische Dienstgüteklasse einem bestimmten sog. DSCP (Differentiated Services Code Point) zugeordnet werden.

In Reaktion auf die Setup-Meldung SETUP2 übermittelt das Endgerät EG2 im Rahmen der Verbindungsaufbausignalisierung VAS eine Connect-Meldung CONNECT2 zur Gatewaysteuerung MGC. Die Gatewaysteuerung MGC übertragt daraufhin eine Kommandomeldung ADD2, in der der Kontext K1 sowie die Termination T2 angegeben ist, zum Nutzdatengateway MG. Die Kommandomeldung ADD2 enthält dabei außerdem die Dienstgüteinformation DGI. Durch die Angabe des Kontextes K1 zusammen mit der Termination T2 wird diese in den die Termination T1 bereits enthaltenden Kontext K1 gesetzt. Anschließend werden im Dienstgüte-Deskriptor DGC2 - wie oben bereits ausgeführt - abhängig von der übermittelten Dienstgüteinformation DGI Dienstgüteeinstellungen vorgenommen. Nach Vergleich der Dienstgüteeigenschaften und Dienstgüteeinstellungen in den Terminationen T1 und T2 wird - wie oben bereits dargelegt - gegebenenfalls eine Umsetzung von Dienstgüteparametern bzw. der Nutzdaten ND durch die Umsetzeinrichtung IWU1 veranlasst.

Im Anschluss daran wird eine Connect-Meldung CONNECT1 von der Gatewaysteuerung MGC zum Endgerät EG1 übermittelt, wodurch die Übertragung der Nutzdaten ND zwischen dem Endgerät EG1 und dem Endgerät EG2 freigegeben wird.

## Patentansprüche

1. Verfahren zur Unterstützung von Dienstgütemerkmalen in Kommunikationsnetzen mit einer Gatewayeinrichtung,
**dadurch gekennzeichnet, dass**
a) die Gatewayeinrichtung logisch in eine Gatewaysteuerung (MGC) und einen Nutzdatengateway (MG) getrennt ist,
b) durch die Gatewaysteuerung (MGC) eine Dienstgütesignalisierung (DGS) erfasst wird,
c) abhängig von der erfassten Dienstgütesignalisierung (DGS) eine Dienstgüteinformation (DGI) von der Gatewaysteuerung (MGC) zum Nutzdatengateway (MG) übermittelt wird,
d) durch den Nutzdatengateway (MG) spezifische Dienstgüteeigenschaften von Verbindungsabschnitten (V1, V2), die am Nutzdatengateway (MG) ankommen und/oder abgehen, erfasst werden, und
e) durch den Nutzdatengateway (MG) abhängig von den verbindungsabschnittspezifischen Dienstgüteeigenschaften eine Dienstgüteeinstellung gemäß der übermittelten Dienstgüteinformation (DGI) vorgenommen wird.

2. Verfahren nach Anspruch 1,
**dadurch gekennzeichnet,**
**dass** die Dienstgüteinformation (DGI) mittels eines um ein Dienstgüteinformation-Signalisierungselement erweiterten H.248-Protokolls übermittelt wird.

3. Verfahren nach Anspruch 1,
**dadurch gekennzeichnet,**
**dass** die Dienstgüteinformation (DGI) mittels eines um ein Dienstgüteinformation-Signalisierungselement erweiterten "Media Gateway Control Protocol (MGCP)" gemäß IETF-Standard übermittelt wird.

4. Verfahren nach einem der vorhergehenden Ansprüche,
**dadurch gekennzeichnet,**
**dass** durch den Nutzdatengateway (MG) die Dienstgüteeigenschaften von abgehenden und ankommenden Verbindungsabschnitten (V1, V2) verglichen werden und abhängig vom Vergleichsergebnis diesen Verbindungsabschnitten (V1, V2) zugeordnete Dienstgüteparameter umgesetzt werden.

5. Verfahren nach einem der vorhergehenden Ansprüche,
**dadurch gekennzeichnet,**
**dass** durch die Gatewaysteuerung (MGC) eine generische Dienstgüteinformation (DGI) zum Nutzdatengateway (MG) übermittelt wird, und
**dass** die generische Dienstgüteinformation (DGI) durch den Nutzdatengateway (MG) abhängig von den verbindungsabschnittspezifischen Dienstgüteeigenschaften in verbindungsabschnittspezifische Dienstgüteeinstellungen umgesetzt wird.

6. Verfahren nach einem der vorhergehenden Ansprüche,
**dadurch gekennzeichnet,**
**dass** die vom Nutzdatengateway (MG) abgehenden Verbindungsabschnitte (V1, V2) jeweils durch ein spezifisches, Dienstgüteparameter aufweisendes Datenobjekt (T1, T2) gesteuert werden.

7. Verfahren nach einem der vorhergehenden Ansprüche,
**dadurch gekennzeichnet,**
**dass** durch die Gatewaysteuerung (MGC) verbindungsabschnittspezifische Dienstgüteeigenschaften vom Nutzdatengateway (MG) abgefragt werden, und
die Dienstgüteinformation (DGI) abhängig von den abgefragten Dienstgüteeigenschaften übermittelt wird.

8. Verfahren nach einem der vorhergehenden Ansprüche,
**dadurch gekennzeichnet,**
**dass** abhängig von einer Dienstgütevorgabe eine weitere Dienstgüteinformation von der Gatewaysteuerung (MGC) zu einem Verbindungsendpunkt (EG1, EG2) übermittelt wird.

9. Verfahren nach einem der vorhergehenden Ansprüche,
**dadurch gekennzeichnet,**
**dass** die Dienstgütesignalisierung (DGS) gemäß der ITU-T-Empfehlung H.323 erfolgt.

10. Verfahren nach einem der Ansprüche 1 bis 9,
**dadurch gekennzeichnet,**
**dass** die Dienstgütesignalisierung (DGS) mittels des "Session Initiation Protocol (SIP)" gemäß IETF erfolgt.

## Claims

1. Method for supporting quality of service features in communications networks with a gateway device,
**characterized in that**
a) the gateway device is logically divided up into a gateway controller (MGC) and a user data gateway (MG),
b) quality of service signaling (DGS) is evaluated by the gateway controller (MGC),
c) depending on the evaluated service signaling (DGS), quality of service information (DGI) is transferred from the gateway controller (MGC) to the user data gateway (MG),
d) specific quality of service properties of connection segments (V1, V2) coming into and/or going out from the user data gateway (MG) are evaluated by the user data gateway (MG), and
e) depending on the connection-segment-specific quality of service properties, a quality of service setting is carried out via the user data gateway (MG) according to the transferred quality of service information (DGI).

2. Method according to Claim 1,
**characterized in that**
the quality of service information (DGI) is transferred by means of an H.248 protocol extended to include a quality of service information signaling element.

3. Method according to Claim 1,
**characterized in that** the quality of service information (DGI) is transferred by means of a "Media Gateway Control Protocol" (MGCP) according to the IETF standard, which is extended to include a quality of service signaling information element.

4. Method according to one of the previous claims,
**characterized in that**
the quality of service properties of outgoing and incoming connection segments (V1, V2) are compared by the user data gateway (MG) and quality of service parameters allocated to these connection segments (V1, V2) are converted depending on the result of the comparison.

5. Method according to one of the previous claims,
**characterized in that**
generic quality of service information (DGI) is transferred by the gateway controller (MGC) to the user data gateway (MG), and
the generic quality of service information (DGI) is converted by the user data gateway (MG) into connection-segment-specific quality of service settings depending on the connection-segment-specific quality of service properties.

6. Method according to one of the previous claims,
**characterized in that**
the connection segments (V1, V2) going out from the user data gateway (MG) are in each case controlled by a specific data object (T1, T2) which has specific quality of service parameters.

7. Method according to one of the previous claims,
**characterized in that**
connection-segment-specific quality of service properties are retrieved by the gateway controller (MGC) from the user data gateway (MG), and
the quality of service information (DGI) is transferred depending on the retrieved quality of service properties.

8. Method according to one of the previous claims,
**characterized in that**
further quality of service information is transferred from the gateway controller (MGC) to a connection end point (EG1, EG2) depending on a quality of service specification.

9. Method according to one of the previous claims,
**characterized in that**
the quality of service signaling (DGS) is carried out according to ITU-T Recommendation H.323.

10. Method according to one of Claims 1 to 9,
**characterized in that**
the quality of service signaling (DGS) is carried out by means of the "Session Initiation Protocol (SIP)" according to IETF.

## Revendications

1. Procédé pour supporter des caractéristiques de qualité de service dans des réseaux de communication avec un dispositif passerelle,
**caractérisé en ce que**
a) le dispositif passerelle est séparé logiquement en une commande de passerelle (MGC) et une passerelle de données utiles (MG),
b) une signalisation de qualité de service (DGS) est enregistrée par la commande de passerelle (MGC),
c) une information de qualité de service (DGI) est transmise de la commande de passerelle (MGC) à la passerelle de données utiles (MG) en fonction de la signalisation de qualité de service (DGS) enregistrée,
d) la passerelle de données utiles (MG) enregistre des propriétés de qualité de service spécifiques de tronçons de liaison (V1, V2) qui arrivent et/ou partent sur la passerelle de données utiles (MG), et
e) la passerelle de données utiles (MG) effectue en fonction des propriétés de qualité de service spécifiques au tronçon de liaison un réglage de qualité de service selon l'information de qualité de service (DGI) transmise.

2. Procédé selon la revendication 1,
**caractérisé en ce que**
l'information de qualité de service (DGI) est transmise au moyen d'un protocole H.248 élargie avec un élément de signalisation d'information de qualité de service.

3. Procédé selon la revendication 1,
**caractérisé en ce que**
l'information de qualité de service (DGI) est transmise au moyen d'un "Media Gateway Control Protocol (MGCP)" complété par un élément de signalisation d'information de qualité de service selon le standard IETF.

4. Procédé selon l'une quelconque des revendications précédentes,
**caractérisé en ce que**
les propriétés de qualité de service de tronçons de liaison (V1, V2) partant et arrivant sont comparées par la passerelle de données utiles (MG) et des paramètres de qualité de service attribués à ces tronçons de liaison (V1, V2) sont appliqués en fonction du résultat de la comparaison.

5. Procédé selon l'une quelconque des revendications précédentes,
**caractérisé en ce que**
la commande de passerelle (MGC) transmet une information générique de qualité de service (DGI) à la passerelle de données utiles (MG), et
l'information générique de qualité de service (DGI) est convertie par la passerelle de données utiles (MG) en fonction des propriétés de qualité de service spécifiques au tronçon de liaison en réglages de qualité de service spécifiques au tronçon de liaison.

6. Procédé selon l'une quelconque des revendications précédentes,
**caractérisé en ce que**
les tronçons de liaison (V1, V2) partant de la passerelle de données utiles (MG) sont commandés respectivement par un objet de données (T1, T2) spécifique et présentant des paramètres de qualité de service.

7. Procédé selon l'une quelconque des revendications précédentes,
**caractérisé en ce que**
la commande de passerelle (MGC) extrait des propriétés de qualité de service spécifiques au tronçon de liaison à partir de la passerelle de données utiles (MG) et l'information de qualité de service (DGI) est transmise en fonction des propriétés de qualité de service extraites.

8. Procédé selon l'une quelconque des revendications précédentes,
**caractérisé en ce que**
une autre information de qualité de service est transmise en fonction d'une spécification de qualité de service de la commande de passerelle (MGC) à une terminaison de liaison (EG1, EG2).

9. Procédé selon l'une quelconque des revendications précédentes,
**caractérisé en ce que**
la signalisation de qualité de service (DGS) s'effectue selon la recommandation de H.323 de ITU-T.

10. Procédé selon l'une quelconque des revendications 1 à 9,
**caractérisé en ce que**
la signalisation de qualité de service (DGS) s'effectue au moyen du "Session Initiation Protocol (SIP)" selon IETF.
